# EUROPÄISCHE PATENTSCHRIFT

(11) **EP 4 698 363 B1**
(45) Veröffentlichungstag und Bekanntmachung des Hinweises auf die Patenterteilung: **16.09.2026**
(21) Anmeldenummer: 25729244.1
(22) Anmeldetag: 23.05.2025
(51) Int. Cl.: B29C 41/20

(54) **BAUTEIL UMFASSEND ROHR UND BEHÄLTER SOWIE VERFAHREN ZUR HERSTELLUNG DESSELBEN**
COMPONENT COMPRISING A TUBE AND A CONTAINER, AND METHOD FOR PRODUCING SAME
COMPOSANT COMPRENANT UN TUBE ET UN RÉCIPIENT, ET SON PROCÉDÉ DE PRODUCTION

(30) Priorität: 14.06.2024 DE 102024116846
(43) Veröffentlichungstag der Anmeldung: 25.02.2026
(73) Patentinhaber: Elkamet Kunststofftechnik GmbH, 35216 Biedenkopf (DE)
(72) Erfinder: EMRICH, Marco, 35327 Ulrichstein (DE); WAGNER, Arnd, 35075 Gladenbach (DE); BALZER, Steffen, 35080 Bad Endbach (DE); DEUSSEN, Martin, 35039 Marburg (DE); SCHORGE, Sebastian, 35102 Lohra (DE)
(74) Vertreter: Keil & Schaafhausen Patentanwälte PartGmbB
(86) Internationale Anmeldenummer: PCT/EP2025/064237
(87) Internationale Veröffentlichungsnummer: WO 2025/256890

(56) Entgegenhaltungen:
- WO-A1-2016/088089
- DE-A1- 10 241 286
- GB-A- 2 388 087
- US-A- 3 783 060

## Beschreibung

Die Erfindung betrifft ein Bauteil, welches einen Behälter und ein Rohr umfasst, wobei der Behälter eine einen ersten Kunststoff enthaltende Behälterwandung umfasst, die einen Aufnahmeraum des Behälters zumindest teilweise begrenzt, und wobei das Rohr eine metallische Basisschicht sowie eine einen zweiten Kunststoff enthaltende erste Kunststoffschicht aufweist. Das Rohr ist dabei in einem ersten Verbindungsbereich mit der Behälterwandung verbunden, wobei sich das Rohr ausgehend von dem ersten Verbindungsbereich wenigstens teilweise in den Aufnahmeraum hinein erstreckt. Ferner richtet sich die Erfindung auch auf ein Verfahren zur Herstellung eines solchen Bauteils.

Behälter aus Kunststoff finden in zahlreichen Gebieten Anwendung. Im Gebiet der Fahrzeugindustrie sind dies vor allem Tanks für Kraftstoffe oder zur Aufbewahrung anderer Flüssigkeiten, was aus der vergleichsweise einfachen Formgebung, dem geringen Gewicht sowie der Korrosionsbeständigkeit resultiert. Ein Beispiel für einen derartigen Behälter in Zusammenschau mit einem geeigneten Herstellungsverfahren findet sich beispielsweise in der DE 10 2017 130 747 A1.

Die GB 23 88 087 A beschreibt einen Polymerbehälter mit einer Halterung zur Befestigung eines Elements, beispielsweise eines Filters. Unterhalb dieser Halterung befindet sich eine stützende Struktur, die in den Behälter integriert ist und das Element insbesondere dann von unten stützt, wenn sich der Behälter bei Hitze verformt. Unterhalb dieser Haltevorrichtung befindet sich an einem Behälterboden eine Stützformation, die integral mit dem Behälterkörper ausgebildet ist und das Element von unten abstützt, insbesondere dann, wenn sich der Behälter im Betrieb erwärmt und verformt.

Der in dem in Dokument WO 2016/088089 A1 gezeigte Behälterkörper des Tanks wird aus Kunststoffmaterial im Rotationsgussverfahren in einer Form hergestellt. Vor dem Formvorgang wird eine Stabilisierungsstruktur in der Form positioniert, die eine starre Längsstange umfasst, welche sich zwischen zwei gegenüberliegenden Wandabschnitten der Form erstreckt, sowie mindestens eine Querstrebe, die von der Stange ausgeht. Diese Struktur ist bei der Schmelztemperatur des Kunststoffmaterials im Wesentlichen wärmestabil. Nach dem Formvorgang umschließt und fixiert der Behälterkörper mindestens einen Teil der Querstrebe, sodass die Stabilisierungsstruktur fest im Behälterkörper verankert ist.

Dokument DE 102 41 286 A1 zeigt ein Bauteil mit einer Verbindung einer Fluidleitung mit einer Öffnung eines überwiegend aus thermoplastischem Kunststoff, insbesondere Polyolefin, bestehenden Behälters oder zum Verschließen dieser Öffnung. Das Bauteil besteht aus zwei Kunststoffkomponenten: einer ersten Komponente, deren Material sich mit dem Behältermaterial durch Schweißen stoffschlüssig verbinden lässt, jedoch keine ausreichende Diffusionssperre gegenüber Kohlenwasserstoffen wie Benzin oder Diesel aufweist, und einer zweiten Komponente, deren Material eine deutlich höhere Diffusionssperrfähigkeit, geringere Quellneigung, höhere mechanische Festigkeit und bessere Wärmeformbeständigkeit besitzt. Dabei umschließt das Material der ersten Komponente die zweite Komponente bis zu einer Einspritzstelle, die der zum Behälter hin anzuschweißenden Fläche möglichst weit gegenüberliegt. Über diese Einspritzstelle wird das Material der zweiten Komponente in die noch plastische innere Zone der ersten Komponente eingespritzt, sodass eine dichte und stabile Verbindung mit verbesserten Barriere- und Festigkeitseigenschaften entsteht.

Dokument US 3,783,060 A beschreibt einen glasfaserverstärkten Lagertank, der durch die Herstellung einer faserverstärkten zylindrischen Seitenwand und das Anbringen zweier Endkuppeln an den Stirnseiten gebildet wird. Die Endkuppeln werden vorgefertigt in einer runden Form mit der gewünschten Kontur und Größe.

Zunächst wird ein Trennmittel auf die Formoberfläche aufgesprüht. Anschließend werden Glasfasern zusammen mit einem katalysierten Harzbindemittel in der rotierenden, beheizten Form von der Mitte bis zum Rand aufgetragen, wodurch die Endkuppeln aushärten. Die zylindrische Seitenwand entsteht, indem glasfaserverstärktes Harz auf die Innenfläche einer rotierenden zylindrischen Form aufgetragen wird, während die zuvor gefertigten Endkuppeln an den Stirnseiten der Form befestigt sind. Optional kann partikuläres Material, etwa Sand, der Harzmasse zugesetzt werden. Die Form besteht aus längsgeteilten, bogenförmigen Segmenten, die nach dem Aushärten geöffnet werden können, um den vollständig geformten Lagertank zu entnehmen.

Ein Behälter mit einer integrierten Leitung in seinem Inneren ist beispielsweise aus der WO 2008/061588 A1 bekannt. Dort wird ein Hohlkörper beschrieben, in dem eine Leitung zumindest abschnittsweise direkt stoffschlüssig mit der Innenwand dieses Hohlkörpers verbunden ist.

In ähnlicher Weise beschreibt die DE 102 41 286 ein Bauteil aus Polyolefin, in welchem ein Kunststoffrohr mit einem Behälter verbunden ist. Die Verbindung ist dabei zweiteilig ausgeführt, um sowohl eine hohe Festigkeit als auch eine ausreichende Diffusionssperre sicherzustellen.

Eine zweischichtige Verbindung ist auch in der US 8,303,877 B3 beschrieben, um ein Muffe mit einem Behälter für Flüssigkeiten zu verbinden. Mittels dieser Muffe kann dann beispielsweise ein Rohr befestigt werden.

Dabei wird es mit Blick auf die gestiegenen ökologischen Anforderungen an Kraftfahrzeugen immer wichtiger, eine Formgebung dieser Kunststoffbehälter bereitzustellen, die nicht nur individuell auf den jeweiligen Fahrzeugtyp angepasst ist, sondern vor allem eine möglichst kompakte und damit letztlich gewichtsparende Bauweise ermöglicht. Gerade Tankbehälter erforderten bisher eine Führung von Leitungen, Rohren etc. um den Tankbehälter herum, wodurch zusätzliches Material und zusätzlicher Raum benötigt wurde, was beides dem Ziel der Gewichtsreduktion entgegensteht. Gleichzeitig müssen die hohen Sicherheitsanforderungen an Tankbehälter durch entsprechende Beständigkeit bei der Einwirkung von großen Kräften oder hohen Temperaturen gewährleistet sein.

In ähnlicher Weise beschreibt die DE 102 41 286 ein Bauteil aus Polyolefin, in welchem ein Kunststoffrohr mit einem Behälter verbunden ist. Die Verbindung ist dabei zweiteilig ausgeführt, um sowohl eine hohe Festigkeit als auch eine ausreichende Diffusionssperre sicherzustellen.

Eine zweischichtige Verbindung ist auch in der US 8,303,877 B3 beschrieben, um ein Muffe mit einem Behälter für Flüssigkeiten zu verbinden. Mittels dieser Muffe kann dann beispielsweise ein Rohr befestigt werden.

Dabei wird es mit Blick auf die gestiegenen ökologischen Anforderungen an Kraftfahrzeugen immer wichtiger, eine Formgebung dieser Kunststoffbehälter bereitzustellen, die nicht nur individuell auf den jeweiligen Fahrzeugtyp angepasst ist, sondern vor allem eine möglichst kompakte und damit letztlich gewichtsparende Bauweise ermöglicht. Gerade Tankbehälter erforderten bisher eine Führung von Leitungen, Rohren etc. um den Tankbehälter herum, wodurch zusätzliches Material und zusätzlicher Raum benötigt wurde, was beides dem Ziel der Gewichtsreduktion entgegensteht. Gleichzeitig müssen die hohen Sicherheitsanforderungen an Tankbehälter durch entsprechende Beständigkeit bei der Einwirkung von großen Kräften oder hohen Temperaturen gewährleistet sein.

Es ist daher Aufgabe der vorliegenden Erfindung, einen Kunststoffbehälter bereitzustellen, welcher ein kompakteres Design ermöglicht bei gleichzeitig hoher mechanischer und thermischer Stabilität.

Diese Aufgabe wird durch ein Bauteil mit den Merkmalen des Anspruchs 1 gelöst, welcher ein solches Bauteil durch einen Behälter und ein Rohr definiert.

Der Behälter, welcher vorzugsweise als Tank für Flüssigkeiten beispielsweise in der Fahrzeugindustrie genutzt wird, ist durch eine einen ersten Kunststoff enthaltende Behälterwandung gebildet, welche wenigstens teilweise einen Aufnahmeraum des Behälters begrenzt. Insbesondere, aber nicht ausschließlich, ist für die Nutzung als Tank ein geschlossener Aufnahmeraum vorteilhaft, wobei geschlossen bedeutet, dass der Aufnahmeraum durch die Behälterwandung und andere Einlassungen vollständig definiert und damit abgeschlossen ist.

Das Rohr weist eine metallische Basisschicht sowie eine einen zweiten Kunststoff enthaltende erste Kunststoffschicht auf. Die metallische Schicht sichert die notwendige mechanische und thermische Robustheit. Durch das Vorsehen der metallischen Schicht kann das Rohr - bei gleicher mechanischer Stabilität - kleiner dimensioniert werden als ein Rohr ohne Metallschicht, wodurch sich ein höheres Nutzvolumen im Aufnahmeraum ergibt. Gleichzeitig gewährleistet die metallische Basisschicht eine einfache plastische Verformbarkeit des Rohrs zur Anpassung an notwendige Streckenführung durch ggf. komplexe Behälter sowie eine Abschirmung von Kabeln, Leitungen oder anderen gegebenenfalls durch das Rohr geführten Komponenten.

Erfindungsgemäß ist das Rohr in einem ersten Verbindungsbereich mit der Behälterwandung verbunden, wobei sich das Rohr ausgehend von dem ersten Verbindungsbereich wenigstens teilweise in den Aufnahmeraum hinein erstreckt. So erfolgt eine Integration von Rohren in einen Behälter. Durch die Verbindung im ersten Verbindungsbereich wird eine stabile Einheit geschaffen, während das Rohr den Aufnahmeraum des Behälters nutzt, um eine kompakte Bauweise zu gewährleisten. Es ist dann möglich, entweder Fluide durch dieses Rohr zu führen oder das Rohr zur Kabelführung zu nutzen. Die flexible Platzierung der Kabelauslässe an beliebigen Stellen des Behälters ermöglicht eine vielseitige Nutzung und Integration elektronischer Komponenten für verschiedene Anwendungen. Durch die geschützte und nicht sichtbare Verlegung der Kabel wird nicht nur eine kompaktere Bauweise erreicht, sondern teilweise werden auch die ästhetische Gestaltung verbessert sowie die Funktionalität und Sicherheit der elektronischen Systeme gewährleistet, denn diese sind so vor Verschmutzung geschützt und bleiben somit langfristig funktionsfähig. Zusätzlich gewährleistet die Positionierung innerhalb des Behälters einen äußeren Schutz der Kabel, was zu einer erhöhten Sicherheit führt.

Die potenziellen Anwendungen dieses innovativen Behältersystems sind vielfältig. Zu den möglichen Einsatzgebieten zählen vor allem Leitungsführungen hin zu mit Strom und/oder Daten zu versorgenden Vorrichtungen. Im Bereich der mit Strom zu versorgenden Leuchtmittel, welche üblicherweise in Nähe eines Tanks angeordnet sind, zählen unter anderem Positionsleuchten zur verbesserten Sichtbarkeit und Sicherheit im Straßenverkehr, Einstiegsbeleuchtung oder beleuchtete Stufen, um den Zugang zu Fahrzeugen oder anderen Strukturen zu erleichtern und Unfälle zu vermeiden, Blinker in den Kotflügeln, um Fahrtrichtungsänderungen deutlich zu signalisieren und die Verkehrssicherheit zu erhöhen, Scheinwerfer im Fronttank für eine optimierte Ausleuchtung der Umgebung in dunklen oder schlecht beleuchteten Bereichen, Blinker oder Rücklichter am Heckträgertank, um die Sichtbarkeit und damit die Sicherheit von Fahrzeugen zu verbessern. Lampenhalterungen am Kotflügel, um zusätzliche Lichtquellen für verschiedene Zwecke anzubringen, z.B. zur Ausleuchtung des Arbeitsbereichs und leuchtende Logos auf dem Behälter zur Markenpräsentation oder als zusätzliches Sicherheitsmerkmal, um das Fahrzeug bei Nacht besser erkennbar zu machen.

Es ist erfindungswesentlich, dass der Verbindungsbereich fluiddicht ausgebildet ist. In diesem Sinne ist "fluiddicht" definiert als die Fähigkeit eines Materials oder einer Verbindung, eine für technische Zwecke ausreichend undurchlässige Barriere gegen das Eindringen oder Entweichen von Gasen und Flüssigkeiten zu bilden.

Die Verbindung von Behälter und Rohr in dem Verbindungsbereich, durch die das erfindungsgemäße Bauteil geformt wird, kann form- und/oder stoffschlüssig erfolgen.

"Formschlüssig" bezieht sich auf eine Verbindung zwischen Behälter und Rohr, bei der die Form der beteiligten Teile so gestaltet ist, dass sie ineinandergreifen oder miteinander verzahnen. Diese Art der Verbindung beruht auf mechanischer Passung und geometrischer Formgebung, wodurch die Teile in ihrer Position fixiert werden. Formschlüssige Verbindungen zeichnen sich durch ihre hohe Festigkeit und Steifigkeit aus, da sie nicht nur auf äußeren Kräften beruhen, sondern auch auf der geometrischen Passung der Teile. Sie werden häufig in Anwendungen eingesetzt, bei denen eine zuverlässige und präzise Verbindung erforderlich ist.

In der vorliegenden Erfindung ergibt sich die Formschlüssigkeit durch die Formung der beiden Kunststoffschichten von Behälterwandung und Rohr. Vorzugsweise werden daher für eine formschlüssige Verbindung Thermoplaste als Kunststoffe eingesetzt.

Der Begriff "stoffschlüssig" bezieht sich auf eine Verbindung zwischen zwei oder mehreren Bauteilen, bei der die Materialien der beteiligten Teile miteinander verschmolzen oder verbunden sind. Diese Art der Verbindung beruht auf der chemischen Verbindung oder Interaktion zwischen den Materialien, wodurch eine feste und dauerhafte Verbindung entsteht. Stoffschlüssige Verbindungen zeichnen sich durch ihre hohe Festigkeit und Dichtigkeit aus, da die Materialien miteinander verschmolzen sind und eine homogene Struktur bilden. Sie werden häufig in Anwendungen eingesetzt, bei denen eine hohe Belastbarkeit und Beständigkeit gegen äußere Einflüsse erforderlich ist. Zu den stoffschlüssigen Verbindungen innerhalb von Kunststoffbaugruppen zählen vor allem direkte Verbindungen miteinander, die im weitesten Sinne als Polymerverbindung zweier Kunststoffe zu verstehen sind. Auch Klebeverbindungen und Sinterverbindungen sind grundsätzlich von dieser Definition umfasst.

Beim Verschweißen werden die zu verbindenden Kunststoffteile lokal erhitzt, bis sie plastisch werden. Anschließend werden sie zusammengepresst, so dass sich die Moleküle der beiden Teile vermischen und eine homogene Verbindung bilden, wenn sie abkühlen. Dieser Prozess kann durch verschiedene Methoden wie Reibschweißen, Ultraschallschweißen oder Heißluftschweißen durchgeführt werden. Die Ausbildung einer stoffschlüssigen Verbindung durch Schweißen ist im Fall der vorliegenden Erfindung besonders präferiert, da sie in diesem Anwendungsfall einfach und zuverlässig erzeugt werden kann.

Beim Kleben von Kunststoffen werden spezielle Klebstoffe oder Klebeverbindungen verwendet, die eine starke chemische Bindung mit den Oberflächen der Kunststoffe eingehen. Diese Klebstoffe dringen in die Poren und Mikrostrukturen der Oberflächen ein und bilden eine dauerhafte Verbindung, wenn sie aushärten. Die Auswahl des richtigen Klebstoffs ist entscheidend für die Qualität und Haltbarkeit der Verbindung.

Während beim Schweißen oder Kleben zwei bereits vorgefertigte Kunststoffkomponenten miteinander gefügt werden, wird bei einer Sinterverbindung nur eine vorgefertigte Kunststoffkomponente bereitgestellt, wobei die zweite Kunststoffkomponente durch ein Sinterverfahren hergestellt und dabei *in situ* an die vorgefertigte Komponente angesintert wird. Im Ergebnis kann auch auf diese Weise eine stoffschlüssige Verbindung hergestellt werden.

Schließlich können einige Kunststoffe miteinander reagieren, um eine stoffschlüssige Verbindung einzugehen. Dies geschieht durch chemische Reaktionen, bei denen die Moleküle der Kunststoffe miteinander verknüpft werden, um eine feste und dauerhafte Verbindung zu bilden. Diese Art der Verbindung erfordert oft spezielle Formulierungen oder Zusatzstoffe, um die Reaktion zu initiieren und zu steuern.

Besonders bevorzugt ist eine Verbindung, die gleichermaßen form- und stoffschlüssig ist, was insbesondere durch eine Fertigungstechnik erreicht werden kann, bei der die Behälterwandung entweder erstmalig geformt oder im Verbindungsbereich verformt wird, da so die Verbindung besonders langlebig ist. In ganz besonderer Weise ist dabei eine Verbindung bevorzugt, bei der es sowohl zu einer formschlüssigen als auch zu einer stoffschlüssigen Verbindung kommt, wobei die stoffschlüssige Verbindung durch ein Verschweißen oder eine Reaktion wenigstens einer Kunststoffschicht des Rohrs und dem Kunststoff der Behälterwandung ausgebildet ist.

Nicht notwendigerweise, aber bevorzugterweise, enthält die Außenwand und/oder die Innenwand des Rohrs die erste Kunststoffschicht, da so, vor allem im Fall der Außenwand, der mit der Behälterwandung in direktem Kontakt stehende Bereich besonders groß ist, wodurch eine besonders gute Verbindung aufgebaut werden kann.

Eine bevorzugte Ausführungsform sieht zudem vor allem vor, dass das Rohr zwei Verbindungsbereiche zu der Behälterwandung aufweist, so dass insbesondere in einem ersten Verbindungsbereich das Rohr durch die Behälterwandung in den Aufnahmeraum eintritt, durch diesen geführt wird und an einer anderen Stelle in einem zweiten Verbindungsbereich wieder an die Behälterwandung anschließt. Durch die vorzugsweise zumindest teilweise von der Behälterwandung beabstandete Führung des Rohres, welche so zu verstehen ist, dass das Rohr frei durch den Aufnahmeraum geführt ist, kann im Sinne der gewichtsreduzierenden Bauweise eine möglichst direkte Führung des Rohrs auf kurzem Wege ermöglicht werden.

In einer Ausführungsform weist die Behälterwandung eine Wandungsschicht auf, welche vollständig aus dem ersten Kunststoff besteht. Alternativ oder ergänzend besteht die erste Kunststoffschicht des Rohrs vollständig aus dem zweiten Kunststoff. Die Verwendung von reinem Kunststoff in der Behälterwandung und der ersten Kunststoffschicht trägt dazu bei, die Materialauswahl zu vereinfachen und die Kompatibilität zwischen den verschiedenen Komponenten des Bauteils zu gewährleisten. Dies ermöglicht eine effiziente Fertigung und Montage sowie eine homogene Struktur des Bauteils. Die Verwendung von unterschiedlichen Kunststoffen für die Behälterwandung und die Rohrschicht ermöglicht eine maßgeschneiderte Auswahl entsprechend den Anforderungen an Korrosionsbeständigkeit, Haltbarkeit und mechanische Festigkeit.

Es hat sich zudem als sehr praktikabel herausgestellt, wenn der erste Kunststoff und/oder der zweite Kunststoff ein Polyethylen, ein Polypropylen oder ein Polyamid ist oder sind. Dies liegt darin begründet, dass die Verwendung von Polyethylen, Polypropylen oder Polyamid als Material für die Kunststoffschichten eine hohe Beständigkeit gegenüber chemischen Substanzen und eine gute mechanische Festigkeit bietet, was die Langlebigkeit und Zuverlässigkeit des Bauteils erhöht.

Die Verwendung eines gleichen Kunststoffes hat den Vorteil, dass dadurch oft eine sehr gute Stoffschlüssigkeit der Verbindung erreicht werden kann. Alternativ kann sich jedoch der erste Kunststoff, welcher für die Behälterwandung verwendet wird, von dem zweiten Kunststoff, der eine Kunststoffschicht des Rohres bildet, unterscheiden. Dies ist vor allem dann sinnvoll, wenn unterschiedliche Anforderungsprofile, wie beispielsweise Kontakt mit verschiedenen Fluiden, an die beiden Kunststoffe angelegt werden. Für einen guten Stoffschluss kann es in dieser Alternative sinnvoll sein, dass beide Kunststoffe sich dennoch ähnlich sind, wie es beispielsweise durch die Verwendung zweier unterschiedlicher Polyethylene der Fall wäre, so dass hier dennoch ein guter Stoffschluss erzeugt wird. Teilweise lassen sich ähnliche, aber nicht identische Kunststoffe auch dadurch erzeugen, dass die Behälterwandung und die erste Kunststoffschicht durch separate Verfahren gebildet sind, wobei dies nicht notwendigerweise Verfahren unterschiedlicher Art sein müssen.

Bezogen auf den an den Verbindungsbereich angrenzenden Teil der Behälterwandung und das Rohr an dieser Stelle hat sich ein Winkel von 10° bis 170°, bevorzugt 80° bis 100° als besonders günstig herausgestellt. Die spezifische Ausrichtung des Behälters relativ zum Rohr im Verbindungsbereich trägt dazu bei, eine optimale Struktursteifigkeit und Verbindungsfestigkeit zu gewährleisten. Ein geeigneter Winkel ermöglicht eine effiziente Verteilung von Belastungen und minimiert potenzielle Spannungsspitzen, was zu einer verbesserten Haltbarkeit des Bauteils führt.

Unabhängig von der konkreten Ausgestaltung hat es sich als günstig herausgestellt, wenn in dem ersten Verbindungsbereich die erste Kunstoffschicht mit der Behälterwandung verbunden ist, was in besonderer Weise für eine stoffschlüssige Verbindung gilt. Diese Verbindung, insbesondere in Form einer stoffschlüssigen Verbindung, zwischen der ersten Kunststoffschicht des Rohrs und der Behälterwandung im Verbindungsbereich gewährleistet eine hohe Festigkeit und Dichtheit der Verbindung. Dies reduziert das Risiko von Undichtigkeiten und erhöht die Zuverlässigkeit des Bauteils, insbesondere unter anspruchsvollen Betriebsbedingungen.

Eine alternative oder ergänzende Ausführungsform sieht vor, dass das Rohr sich ausgehend von dem ersten Verbindungsbereich außerhalb des Aufnahmeraums erstreckt. Die Fortsetzung des Rohrs außerhalb des Aufnahmeraums ermöglicht eine bessere Zugänglichkeit bzw. erweiterte Anschlussmöglichkeiten. Auch eine flexible Gestaltung und Positionierung des Bauteils je nach den Anforderungen der Anwendung kann so gegeben sein. Dies verbessert die Vielseitigkeit und Einsatzmöglichkeiten des Bauteils in verschiedenen Kontexten und Umgebungen.

Als günstig hat es sich zudem herausgestellt, wenn die erste Kunststoffschicht auf einer radial äußeren oder einer radial inneren Seite der Basisschicht angeordnet ist. Besonders günstig ist es, wenn die erste Kunststoffschicht auf einer radial äußeren Seite der Basisschicht angeordnet ist und eine äußere Oberfläche des Rohrs bildet oder wenn die erste Kunststoffschicht auf einer radial inneren Seite der Basisschicht angeordnet ist und eine innere Oberfläche des Rohrs bildet. Die spezifische Anordnung der ersten Kunststoffschicht in Bezug auf die Basisschicht ermöglicht eine präzise Steuerung der physikalischen und mechanischen Eigenschaften des Bauteils. Eine äußere Platzierung der Kunststoffschicht kann beispielsweise die Korrosionsbeständigkeit gegenüber im Aufnahmeraum aufgenommenen Kraftstoffen oder anderen Füllmedien verbessern, während eine innere Platzierung die Korrosionsbeständigkeit gegenüber durch das Rohr geführten Fluiden verbessert und/oder die strukturelle Festigkeit erhöht. Über die Positionierung der Kunststoffschicht lässt sich zudem steuern, an welcher Verbindungsstelle oder Anbindungszone (aus Sicht des Rohres) eine mittelbare oder unmittelbare, vorzugsweise stoffschlüssige, Verbindung mit der Behälterwandung vorliegt.

Als Anbindungszone ist dabei derjenige Bereich des Rohrs zu verstehen, in dem das Rohr mit mindestens einem benachbarten Element in unmittelbarem Kontakt steht, oder - mit anderen Worten - die Verbindungsstelle zwischen dem Rohr und einem benachbarten Element. Wenn das Rohr mit seiner radial äußeren Oberfläche mit einem benachbarten Element in Kontakt ist, wird diese Verbindungsstelle als eine radial äußere Anbindungszone bezeichnet. Wenn das Rohr mit seinem stirnseitigen Ende mit einem benachbarten Element in Kontakt ist, wird diese Verbindungsstelle als eine stirnseitige Anbindungszone bezeichnet. Wenn das Rohr mit seiner radial inneren Oberfläche mit einem benachbarten Element in Kontakt ist, wird diese Verbindungsstelle als eine radial innere Anbindungszone bezeichnet. Bei den benachbarten Elementen kann es sich um die Behälterwandung oder um eines der nachfolgend noch erläuterten Elemente handeln. Es ist möglich, dass in einem Verbindungsbereich eine oder zwei oder drei der genannten Anbindungszonen ausgebildet sind.

Im Falle einer bevorzugt komplementären stoffschlüssigen Verbindung ist diese als direkte Verbindung des Kunststoffs des Rohres mit einem Kunststoff des benachbarten Elements, etwa dem Kunststoff der Behälterwandung, zu verstehen, entweder durch eine Polymerisation dieser beiden Kunststoffe miteinander oder durch ein direktes Verschweißen oder Versintern der beiden Kunststoffe. Mit anderen Worten finden sich in der Anbindungszone in diesem Fall nur Kunststoffe der Kunststoffschicht des Rohrs und des benachbarten Elements, etwa der Behälterwandung, oder aber eine aus Monomeren dieser beiden Kunststoffe gebildete Polymermischung, jedoch keine anderen Kunststoffe, wodurch an dieser Stelle eine stoffschlüssige Verbindung durch Kleben ausgeschlossen ist.

Eine weitere bevorzugte Ausführungsform sieht vor, dass das Rohr eine einen dritten Kunststoff enthaltende, zweite Kunststoffschicht aufweist. Diese zweite Kunststoffschicht ist bevorzugt auf der der ersten Kunststoffschicht abgewandten Seite der metallischen Basisschicht angeordnet. Es entsteht so eine SandwichStruktur, bei der die metallische Basisschicht zwischen den beiden Kunststoffschichten eingebettet ist. Die Verwendung einer zweiten Kunststoffschicht ermöglicht eine weitere Anpassung der mechanischen und chemischen Eigenschaften des Bauteils.

Die Anordnung auf der der ersten Kunststoffschicht abgewandten Seite der metallischen Basisschicht verbessert dabei Haftung und Stabilität des Bauteils, da Verbindungen auch zu dieser Schicht hin entstehen können. Dies ist dann der Fall, wenn die zweite Kunststoffschicht in wenigstens einer Anbindungszone, insbesondere stoffschlüssig, mit einem benachbarten Element, insbesondere der Behälterwandung, verbunden ist.

Durch die bevorzugt stoffschlüssig ausgebildete Verbindung auch der zweiten Kunststoffschicht, insbesondere mit der Behälterwandung, im Verbindungsbereich wird eine hohe Festigkeit und Dichtheit der Verbindung gewährleistet. Dies verbessert die Zuverlässigkeit des Bauteils und minimiert das Risiko von Leckagen oder Materialermüdung.

Besonders vorteilhaft ist es, wenn die Kunststoffschicht die metallische Basisschicht auf ihrer radial inneren Seite und/oder auf ihrer radial äußeren Seite vollständig bedeckt. Dadurch kann die Metallschicht besonders zuverlässig vor Korrosion geschützt werden.

Zwischen der Basisschicht und der ersten Kunststoffschicht und/oder zwischen der Basisschicht und der zweiten Kunststoffschicht kann oder können jeweils eine oder mehrere Haftvermittlerschichten vorgesehen sein. Dadurch kann die Stabilität der Verbindung zwischen der Basisschicht und der jeweiligen Kunststoffschicht erhöht werden.

Als günstig hat sich außerdem herausgestellt, dass die metallische Basisschicht Aluminium oder Kupfer enthält. Die Verwendung von Aluminium oder Kupfer als Material für die metallische Basisschicht bietet eine hohe Wärmeleitfähigkeit und Korrosionsbeständigkeit, was zu einer verbesserten Leistung und Haltbarkeit des Bauteils beiträgt. Insbesondere Aluminium ist zudem ein sehr leichter Werkstoff, was das Ziel einer Gewichtsreduktion im Fahrzeug weiter unterstützt.

Ergänzend kann zwischen der Behälterwandung und dem Rohr wenigstens teilweise eine Haftvermittlungsschicht und/oder ein Verbindungselement vorgesehen sein. Durch die Verwendung eines Verbindungselements können Funktionalitäten im Bereich der Verbindung zwischen Behälter und Rohr wie etwa Gewinde oder auch zusätzliche Versteifungen integriert werden. Wird hingegen eine zusätzliche Haftvermittlungsschicht zwischen der Behälterwandung und der ersten Kunststoffschicht des Rohrs eingearbeitet, so verbessert das die Haftung und Stabilität der Verbindung. Von besonderer Bedeutung ist eine Kombination von Verbindungselement und Haftvermittlungsschicht, wobei das Verbindungselement die Haftvermittlungsschicht bildet oder aufweist, insbesondere da so eine stoffschlüssige Verbindung nicht nur zwischen Behälterwandung und Rohr, sondern auch zu dem Verbindungselement hergestellt wird. Dies trägt zu einer verbesserten Langlebigkeit des Bauteils bei, insbesondere unter anspruchsvollen Betriebsbedingungen. Das Verbindungselement kann aus einem metallischen Werkstoff hergestellt und in dem Verbindungsbereich in die Behälterwandung eingebettet sein. Das Verbindungselement kann alternativ aus einem vierten Kunststoff hergestellt sein. In diesem Fall kann das Verbindungselement auch stoffschlüssig mit der Behälterwandung und/oder mit der ersten und/oder der zweiten Kunststoffschicht des Rohres verbunden sein.

Bei den vorstehend und nachfolgend erläuterten Verbindungen zwischen der Behälterwandung und dem Rohr kann es sich jeweils auch um zumindest teilweise mittelbare Verbindungen unter Zwischenschaltung eines Verbindungselements und/oder einer Haftvermittlungsschicht handeln. Zwei mittelbar miteinander verbundene Elemente sollen auch dann als stoffschlüssig miteinander verbunden gelten, wenn eine stoffschlüssige Verbindung zwischen mindestens einem der Elemente und dem Verbindungselement oder der Haftvermittlungsschicht besteht.

An dieser Stelle soll noch einmal betont werden, dass jede Ausführungsform der Erfindung zumindest eine (radial äußere, stirnseitige oder radial innere) Anbindungszone nach der obigen Definition zwischen dem Rohr und der Behälterwandung und/oder dem Verbindungselement oder der Haftvermittlungsschicht vorsieht. Es ist möglich, aber nicht notwendig, dass in einem Verbindungsbereich insgesamt zwei oder drei Anbindungszonen vorliegen. Sofern das Rohr eine innenliegende und/oder eine außenliegende Kunststoffschicht aufweist, kann in mindestens einer Anbindungszone auch eine stoffschlüssige, insbesondere unmittelbare, Verbindung zwischen zumindest einer Kunststoffschicht des Rohrs einerseits und der Behälterwandung und/oder dem Verbindungselement oder der Haftvermittlungsschicht andererseits ausgebildet sein.

Sofern das Rohr an wenigstens einem ersten, dem ersten Verbindungsbereich zugeordneten Ende offen ist, ist ein Anschluss, insbesondere ein fluidwirksamer Anschluss, mit einem Anschlussteil oder aber die Durchführung eines anderen Bauteils in das Rohr möglich ist. Dies erhöht die Vielseitigkeit und Anpassungsfähigkeit des Bauteils in verschiedenen Anwendungsszenarien, insbesondere in fluidtechnischen Systemen.

Zudem kann das Rohr einen Zweigstrang aufweisen, welcher an einem proximalen Ende, insbesondere fluidwirksam, mit dem Rohr verbunden ist. Das Rohr weist an der Verbindungsstelle mit dem Zweigstrang somit eine Abzweigung auf. Die Anordnung eines Zweigstrangs am Rohr ermöglicht eine verzweigte Fluidführung oder Kabelführung innerhalb des Bauteils. Dies erweitert die Funktionalität und Einsatzmöglichkeiten des Bauteils, insbesondere in Systemen, die eine komplexe Fluidsteuerung oder Verkabelung erfordern.

Vorteilhaft kann hier auch eine Variante sein, bei der ein von dem proximalen Ende beabstandeter Abschnitt des Zweigstrangs in einem dritten Verbindungsbereich mit der Behälterwandung verbunden ist, wobei sich die Abzweigung im Inneren des Behälters, also dem Aufnahmeraum, befindet. So kann ein hochkomplexes Bauteil erzeugt werden, bei dem gleichzeitig die Anzahl der Verbindungsbereiche zwischen Rohr(en) und Behälterwandung minimiert ist.

Weiterhin umfasst die Erfindung ein Verfahren zur Herstellung eines Bauteils mit den Merkmalen nach einem der Ansprüche 1 bis 15.

Dazu werden ein Behälter und ein Rohr bereitgestellt, wobei "Bereitstellung" sowohl die Verwendung eines vorgefertigten Behälters als auch die *in-situ* Herstellung des Behälters im Rahmen des erfindungsgemäßen Verfahrens umfasst. In beiden Fällen weist der Behälter eine einen ersten Kunststoff enthaltende Behälterwandung und das Rohr wenigstens eine einen zweiten Kunststoff enthaltende erste Kunststoffschicht sowie eine metallische Basisschicht auf. Das erfindungsgemäße Verfahren sieht vor, dass das Rohr und die Behälterwandung in wenigstens einem Verbindungsbereich miteinander verbunden werden.

Dieses Verfahren ermöglicht eine effiziente Herstellung des beschriebenen Bauteils unter Berücksichtigung der spezifischen Anforderungen an Materialien und Konstruktion. Durch eine präzise Steuerung der Fertigungsparameter kann eine hohe Qualität und Konsistenz des Endprodukts gewährleistet werden.

Grundsätzlich kann das Verfahren zum einen dadurch ausgeführt werden, dass der Behälter im Rahmen eines Rotationsformverfahrens gefertigt wird.

Im Rotationsformverfahren, das oft zur Herstellung von Kunststoffbehältern angewandt wird, erfolgt die Formgebung mittels eines Rotationswerkzeugs. Dabei wird eine bestimmte Menge an Kunststoffmaterial in Form von Pulver, Pellets oder Mikropellets in eine hohle Rotationsschmelzform eingefüllt, deren Innenoberfläche die Außenoberfläche des späteren Kunststoffbehälters definiert. Die Rotationsschmelzform wird dann um zwei senkrecht zueinander angeordnete Achsen gedreht, während Wärme zugeführt wird, um das Schmelzen und Anlegen des Kunststoffmaterials an der Innenwand der Form zu ermöglichen. Thermoplaste wie Polyethylen (PE), Polypropylen (PP), Polyamid (PA) und Polycarbonat (PC) sind typische Materialien, die bei diesem Verfahren eingesetzt werden, wobei die Verarbeitungstemperaturen oberhalb der Schmelz- oder Erweichungstemperaturen des jeweiligen Materials liegen müssen.

Im erfindungsgemäßen Verfahren wird das Rohr in oder an einem Hohlwerkzeug fixiert. Das Bereitstellen des Behälters erfolgt dann durch das Rotationsformverfahren. Dazu wird ein den ersten Kunststoff enthaltendes oder in den ersten Kunststoff umwandelbares Ausgangsmaterial in das Hohlwerkzeug eingefüllt, und der Behälter wird in dem Hohlwerkzeug durch das oben beschriebene Rotationsverfahren geformt, wobei zugleich das Rohr und die Behälterwandung des *in situ* geformten Behälters in wenigstens einem Verbindungsbereich miteinander verbunden werden.

Alternativ zum Rotationsformverfahren kann der Behälter in Verbindung mit dem Rohr auch durch ein Blasformverfahren gefertigt wird, welches ebenfalls ein weit verbreitetes Verfahren zur Herstellung von hohlen Kunststoffteilen, wie beispielsweise Flaschen, Behältern und anderen Hohlkörpern ist. Beim Blasformen wird ein hohler Vorformling aus Kunststoff in einem Hohlwerkzeug angeordnet, das die Form des gewünschten Produkts definiert. Der Vorformling wird im plastisch verformbaren Zustand durch Innendruck aufgeblasen, wobei er sich an die Innenseite des Hohlwerkzeugs anlegt und die gewünschte Form des Endprodukts annimmt, und anschließend abgekühlt.

Beim Extrusionsblasformen ist der Vorformling ein extrudierter Kunststoffschlauch (Parison), der durch Schließen des Hohlwerkzeugs an beiden Enden abgequetscht und anschließend mittels eines zuvor eingeführten Blasdorns aufgeblasen wird.

Beim Spritzblasen ist der Vorformling ein spritzgegossener, nur einseitig offener Hohlkörper (Preform). Dieser Prozess kann weiter verbessert werden, indem der Vorformling vor dem Blasen axial gestreckt wird (Spritzstreckblasen). Das Material wird dann nicht nur in Umfangsrichtung, sondern auch in axialer Richtung verstreckt, wodurch eine Verbesserung der Materialeigenschaften durch biaxiale Orientierung der Polymerketten bewirkt wird.

In beiden Varianten des Blasformverfahrens ist die Temperaturkontrolle des Kunststoffmaterials von entscheidender Bedeutung, um eine gleichmäßige Wandstärke und Festigkeit des Endprodukts zu gewährleisten. Das Blasformverfahren ist aufgrund seiner Effizienz und Vielseitigkeit weit verbreitet.

Unabhängig vom Herstellungsverfahren für die Bereitstellung des Behälters werden so das Rohr und die Behälterwandung in wenigstens einem Verbindungsbereich miteinander verbunden.

Die Verwendung von Hohlwerkzeugen in Verbindung mit Rotations- oder Blasformverfahren ermöglicht eine effiziente und präzise Herstellung des Bauteils mit minimalen Materialverlusten. Dies führt zu einer verbesserten Produktionsleistung und Kosteneffizienz. Zudem ist insbesondere die formschlüssige Verbindung zwischen den beiden Komponenten Behälter und Rohr besonders gut, da der Behälter praktisch um die Verbindungsstelle herum gefertigt wird. Gleichzeitig kann durch das Herstellungsverfahren die wenigstens eine Kunststoffschicht des Rohres so erwärmt werden, dass es zu einem Ansintern oder Verschmelzen der Kunststoffe von Rohr und Behälterwandung im Verbindungsbereich und damit zur Ausbildung einer insbesondere stoffschlüssigen Verbindung kommt.

Alternativ erfolgt das Verfahren durch die Bereitstellung des Behälters mit einer Öffnung, wobei entweder ein geeigneter Behälter verwendet wird oder zunächst ein Behälter hergestellt wird, wobei eine Öffnung in der Behälterwandung vorgesehen wird. Diese Öffnung dient später dazu, das Rohr durch die Behälterwandung zu führen.

Im zweiten Schritt wird das Rohr durch die zuvor geschaffene Öffnung in die Behälterwandung eingeführt. Dies erfordert Präzision, um sicherzustellen, dass das Rohr korrekt positioniert ist und eine gute Passform mit der Öffnung aufweist.

Im dritten Schritt werden das Rohr und der Behälter in einem Fügebereich verbunden, der die Öffnung umfasst. In diesem Fügebereich entsteht eine Verbindung zwischen dem Rohr und der Behälterwandung, wodurch ein Verbindungsbereich zwischen beiden Komponenten entsteht. Dieser Verbindungsbereich gewährleistet die strukturelle Integrität und Dichtheit des Bauteils. Im Fall einer gewünschten stoffschlüssigen Verbindung kann diese Verbindung durch ein lokales Erwärmen geschehen, wodurch es zu einer Verschweißung kommt. Sofern es sich bei wenigstens einem der Kunststoffe um einen Thermoplast handelt, kann so auch eine Verformung erzeugt werden, die eine formschlüssige Verbindung formt.

Dieses Verfahren ermöglicht eine präzise und zuverlässige Herstellung des Bauteils, wobei eine robuste Verbindung zwischen dem Rohr und dem Behälter geschaffen wird, um eine optimale Leistung und Funktionalität sicherzustellen.

Die Erfindung umfasst schließlich auch die Verwendung des Bauteils nach einem der Ansprüche 1 bis 15 als Tank, insbesondere im Bereich der Kraftfahrzeugtechnik.

Weiterbildungen, Vorteile und Anwendungsmöglichkeiten der Erfindung ergeben sich auch aus der nachfolgenden Beschreibung der Zeichnungen. Dabei bilden alle beschriebenen Merkmale für sich oder in beliebiger Kombination den Gegenstand der Erfindung, unabhängig von ihrer Zusammenfassung in den Ansprüchen oder deren Rückbeziehung.

Es zeigen:

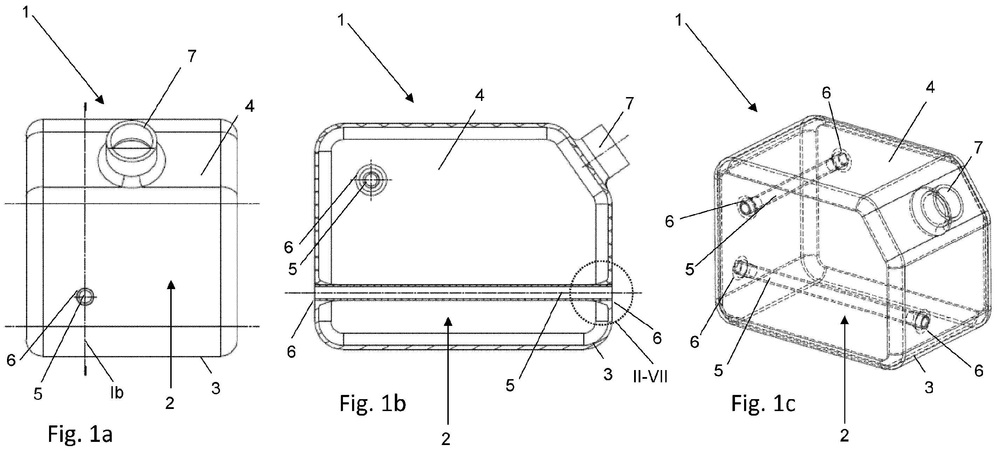

- Figur 1a: das erfindungsgemäße Bauteil in einer Vorderansicht,
- Figur 1 b: das erfindungsgemäße Bauteil in einer Schnittdarstellung,
- Figur 1 c: in einer transparenten perspektivischen Darstellung,
- Figur 2a und 2b: das erfindungsgemäße Bauteil in 2D-Schnitten,
- Figur 3a und 3b: das erfindungsgemäße Bauteil in 2D-Schnitten,
- Figur 4a und 4b: das erfindungsgemäße Bauteil in 2D-Schnitten,
- Figur 5a und 5b: das erfindungsgemäße Bauteil in 2D-Schnitten,
- Figur 6a und 6b: das erfindungsgemäße Bauteil in 2D-Schnitten und
- Figur 7a und 7b: das erfindungsgemäße Bauteil in 2D-Schnitten.

Die Figuren 1a bis 1c zeigen das erfindungsgemäße Bauteil in seiner Verwendung als Tank oder Kanister, wie es beispielsweise im Fahrzeugbereich Anwendung finden kann. Figur 1a zeigt eine Vorderansicht. Figur 1b zeigt einen Schnitt durch das Bauteil entlang der in Figur 1a mit Ib bezeichneten Schnittebene. Dabei wird ein Behälter 2 über eine Behälterwandung 3 und den durch diese Behälterwandung begrenzten Aufnahmeraum 4 definiert. In diesem Aufnahmeraum 4 können insbesondere Flüssigkeiten aufgenommen werden, welche durch einen Stutzen 7 eingefüllt und entnommen werden können. Der Behälter kann weitere Anschlüsse oder Funktionselemente aufweisen.

Durch das Bauteil führt außerdem wenigstens ein Rohr 5, welches in einem Verbindungsbereich 6 mit der Behälterwandung form- und/oder stoffschlüssig verbunden ist.

Figur 1c zeigt das erfindungsgemäße Bauteil 1 in einer transparenten und perspektivischen Darstellung. Dabei ist besonders gut sichtbar, dass das Rohr 5 durch den Aufnahmeraum 4 des Behälters 2 geführt wird, wobei es Bereiche gibt, in denen das Rohr 5 nicht an die Behälterwandung 4 angrenzt, sondern einen Abstand zu der Behälterwandung 3 aufweist.

Zudem sind zwei bevorzugte Ausführungsformen in die Darstellung integriert. Zum einen zeigt Figur 1c eine vollständige Führung des Rohrs 5 durch den Aufnahmeraum von einem ersten Verbindungsbereich 6 hin zu einem zweiten Verbindungsbereich 6. Im Fall offener Rohrenden können so Kabel, Leitungen oder Fluide von einer Stelle an der Behälterwandung 3 durch den Behälter 2 hindurch zu einer anderen Stelle an der Behälterwandung 3 geführt werden. Unabhängig davon verbindet das Rohr 5 zudem die jeweiligen dem ersten Verbindungsbereich 6 und dem zweiten Verbindungsbereich 6 zugeordneten Wandabschnitte der Behälterwandung 3 miteinander und bewirkt eine strukturelle Verstärkung oder Versteifung des Behälters 2. Zum anderen werden zwei Rohre 5 durch den Behälter 2 geführt, wodurch gleichzeitig mehrere Kabel- oder Fluidführungen durch den Aufnahmeraum 4 ermöglicht werden und mehrere Verstärkungselemente vorgesehen sind.

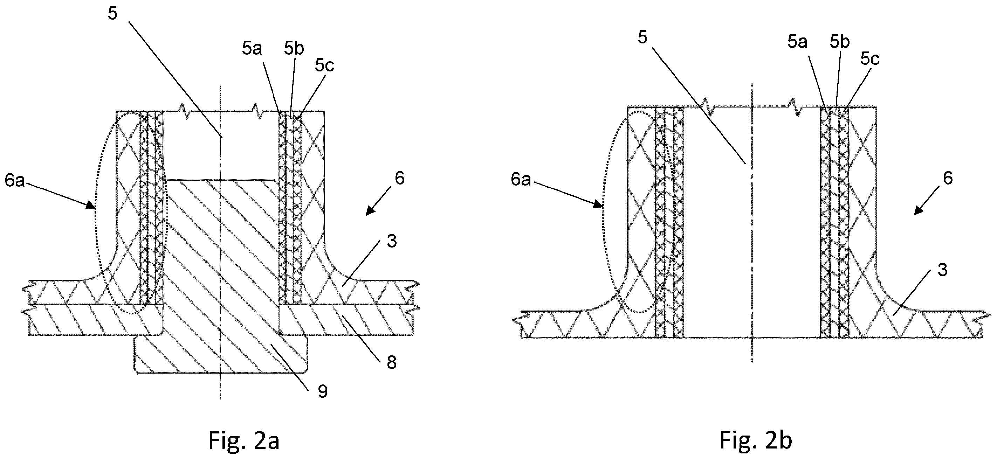

Die Figuren 2 bis 7 werden nachfolgend zunächst gemeinsam beschrieben. Sie zeigen - für jeweils unterschiedliche Ausführungsformen des Bauteils 1 - vergrößerte Schnittdarstellungen eines einen (ersten oder zweiten) Verbindungsbereich 6 umfassenden Ausschnitts des Bauteils 1 in einem in Figur 1b mit II-VII bezeichneten Bereich, wobei die Darstellungen in den Figuren 2 bis 7 gegenüber Figur 1b um 90° im Uhrzeigersinn gedreht sind. Die mit dem Index "a" versehenen Figuren 2a bis 7a zeigen jeweils das Bauteil 1 während seiner Herstellung sowie eine Formschale 8 und einen Haltebolzen 9 als Bestandteile eines zur Herstellung des Bauteils 1 verwendeten Hohlwerkzeugs. Die mit dem Index "b" versehenen Figuren 2b bis 7b zeigen denselben Ausschnitt des entsprechenden Bauteils 1 nach der Entnahme aus dem Hohlwerkzeug.

Die Figuren 2a bis 7a zeigen einen Ausschnitt des erfindungsgemäßen Bauteils 1 während der Herstellung. Dabei wird die Behälterwandung 3 an der Formschale 8 gebildet. Die Formschale 8 ist Bestandteil eines Hohlwerkzeugs, das in diesem Verfahren verwendet wird, um das Kunststoffmaterial zu formen. Das Hohlwerkzeug besteht typischerweise aus zwei oder mehr Formschalen 8, die so gestaltet sind, dass sie im geschlossenen Zustand des Hohlwerkzeugs gemeinsam die gewünschte Form des Behälters 3 definieren, beispielsweise eines Tanks. Bei dem Hohlwerkzeug kann es sich um ein Blasformwerkzeug zur Verwendung in einem Blasformverfahren oder um eine Rotationsschmelzform zur Verwendung in einem Rotationsformverfahren handeln.

Der Prozess des Rotationsformverfahrens beginnt mit dem Einfüllen des den ersten Kunststoff enthaltenden oder in diesen umwandelbaren Ausgangsmaterials in das Hohlwerkzeug. Anschließend wird das geschlossene Hohlwerkzeug in Bewegung versetzt, normalerweise durch Rotation um zwei senkrecht zueinander angeordnete Achsen. Während des Rotationsprozesses verteilt sich das Ausgangsmaterial gleichmäßig auf der Innenwand des Hohlwerkzeugs. Durch die Rotation legt sich das Material an die Innenseite der Formschale 8 an, wodurch eine gleichmäßige Wanddicke und die Form der Behälterwandung 3 entsteht. Das Ausgangsmaterial legt sich zumindest im Bereich des Verbindungsbereichs 6 auch an das Rohr 5 an.

Es ist möglich, dass das Rohr 5 nur in dem Verbindungsbereich 6 in die Behälterwandung 3 bzw. den ersten Kunststoff eingebettet wird und sich im fertigen Bauteil 1 außerhalb des Verbindungsbereichs 6 ohne Beschichtung mit dem ersten Kunststoff in dem Behälter erstreckt. Es ist jedoch auch möglich, dass das Rohr 5 über seine vollständige Erstreckung innerhalb des Behälters 2 mit dem ersten Kunststoff der Behälterwandung 3 beschichtet ist. Während das Kunststoffmaterial in dem Hohlwerkzeug geformt wird und aushärtet, wird die Temperatur kontrolliert, um sicherzustellen, dass das Material seine gewünschten mechanischen Eigenschaften erhält. Nach dem Aushärten wird das Hohlwerkzeug geöffnet, und das fertige Produkt wird entfernt. Dann wird das Hohlwerkzeug für den nächsten Produktionszyklus vorbereitet.

Zur Fertigung des erfindungsgemäßen Bauteils 1 kann das Rohr 5 in dem Hohlwerkzeug mit einem Haltebolzen 9 gehalten sein. Das Rohr 5 kann dabei auf den Haltebolzen 9 aufgesteckt oder aufgeschraubt sein oder anderweitig, auch mittelbar, lösbar mit dem Haltebolzen 9 verbunden sein, wobei der Haltebolzen 9 seinerseits mittels nicht dargestellter Befestigungsmittel lösbar an der Formschale 8 befestigt ist. Nach der Herstellung des Bauteils 1 wird der Haltebolzen 9 von dem Rohr 5 gelöst, so dass das Bauteil 1 aus dem geöffneten Hohlwerkzeug entnommen werden kann.

Gemäß Figur 2a liegt das Rohr 5 während der Herstellung des Bauteils 1 mit einem stirnseitigen Ende an der Formschale 8 an, so dass das Ausgangsmaterial und die daraus entstehende Behälterwandung 3 nur in einer radial äußeren Anbindungszone 6a mit einer Außenseite des Rohrs 5 in Kontakt kommen. Figur 2b zeigt das vorzugsweise nach dem beschriebenen Verfahren gefertigte fertige Bauteil 1, wobei hier das Rohr 5 gemäß einer bevorzugten Ausführungsform zwei Kunststoffschichten 5a, 5c aufweist, zwischen denen eine metallische Basisschicht 5b angeordnet ist, welche unabhängig von der jeweiligen Ausführungsform vorzugsweise überwiegend aus Aluminium und Kupfer besteht. Eine der Figur 2b entsprechende Ausführungsform mit nur einer Kunststoffschicht - 5a oder 5c - ist ebenfalls möglich.

Figur 2b zeigt den Verbindungsbereich 6, welcher grundsätzlich dadurch definiert ist, dass hier das Rohr 5 mit der Behälterwandung 3, unmittelbar und/oder mittelbar, verbunden ist. Figur 2b zeigt eine bevorzugte Ausführungsform, bei der es in dem Verbindungsbereich 6 in der radial äußeren Anbindungszone 6a zu einem direkten Kontakt zwischen wenigstens einer Kunststoffschicht 5a, 5c des Rohres und der Behälterwandung 3 kommt.

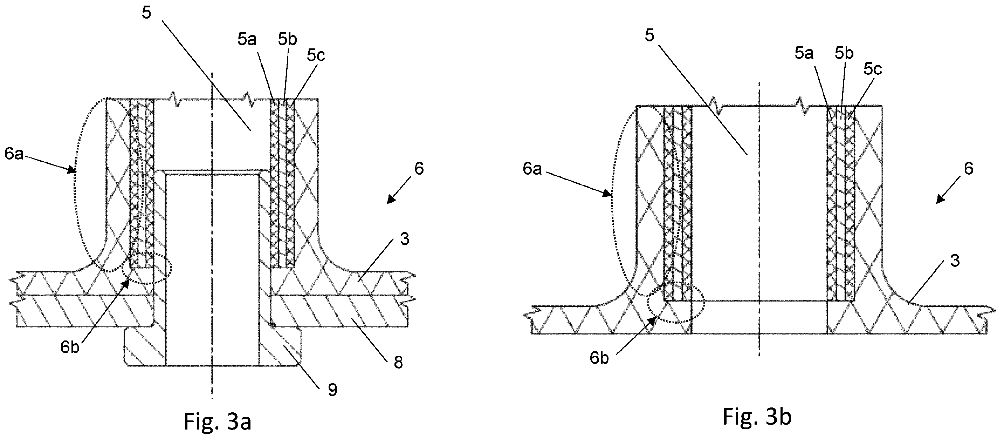

Die Ausführungsform gemäß den Figuren 3a und 3b entspricht weitgehend derjenigen gemäß den Figuren 2a und 2b. Auf die vorstehende Beschreibung wird verwiesen. Abweichend davon ist gemäß Figur 3a ein stirnseitiges Ende des Rohres 5 während der Herstellung des Bauteils 1 von der Formschale 8 beabstandet, so dass das Ausgangsmaterial und die daraus entstehende Behälterwandung 3 in der äußeren Anbindungszone 6a mit der Außenseite des Rohres und zusätzlich in einer zweiten, stirnseitigen Anbindungszone 6b mit einer Stirnseite des Rohrs 5 - und dort vorzugsweise mit allen Schichten des Rohres 5 - in Kontakt kommt. Bei dem in den Figuren 3a und 3b dargestellten (bevorzugten) Aufbau des Rohrs 5 besteht daher insbesondere ein direkter Kontakt der Behälterwandung 3 zu beiden Kunststoffschichten 5a, 5c des Rohres. Im Bereich der äußeren Anbindungszone 6a besteht ein Kontakt zu der Kunststoffschicht 5c, und in der stirnseitigen Anbindungszone 6b besteht ein Kontakt zu der Kunststoffschicht 5a und zu der Kunststoffschicht 5c. Eine der Figur 3b entsprechende Ausführungsform mit nur einer Kunststoffschicht - 5a oder 5c - ist ebenfalls möglich.

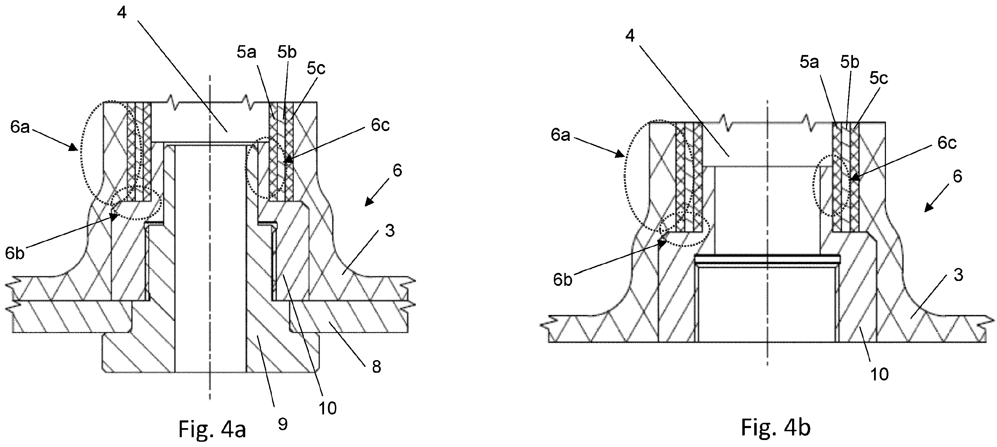

Die Figuren 4a und 4b zeigen ein Bauteil 1, bei welchem ein Insert in Form eines Verbindungselements 10 in das Rohr 5 greift und sowohl mit dem Rohr 5 als auch mit der Behälterwandung 3 verbunden ist. In Figur 4a ist die Situation während der Herstellung unter Verwendung von Formschale 8 und Haltebolzen 9 dargestellt, während Figur 4b das fertige Bauteil 1 zeigt. Gemäß Figur 4a liegt das stirnseitige Ende des Rohres 5 während der Herstellung des Bauteils 1 an einer Anlagefläche des Verbindungselements 10 an, so dass das Ausgangsmaterial und die aus ihm entstehende Behälterwandung 3 nur in der radial äußeren Anbindungszone 6a mit der Außenseite des Rohrs 5 in Kontakt kommen. Das Verbindungselement 10 verbleibt als Insert im fertigen Bauteil 1. In der stirnseitigen Anbindungszone 6b ist die Stirnseite des Rohres 5 mit dem Verbindungselement 10 in Kontakt, in einer dritten, radial inneren Anbindungszone 6c ist eine Innenseite des Rohres 5 mit dem Verbindungselement 10 in Kontakt. Das Verbindungselement 10 kann aus einem metallischen Werkstoff oder aus einem vierten Kunststoff hergestellt und in dem Verbindungsbereich 6 in die Behälterwandung 3 eingebettet sein. Wenn das Verbindungselement 10 aus dem vierten Kunststoff hergestellt ist, kann das Verbindungselement 10 mit der Behälterwandung 3 und/oder mit der ersten und/oder der zweiten Kunststoffschicht 5a, 5c des Rohres 5 stoffschlüssig verbunden sein. Eine der Figur 4b entsprechende Ausführungsform mit nur einer Kunststoffschicht - 5a oder 5c - ist ebenfalls möglich.

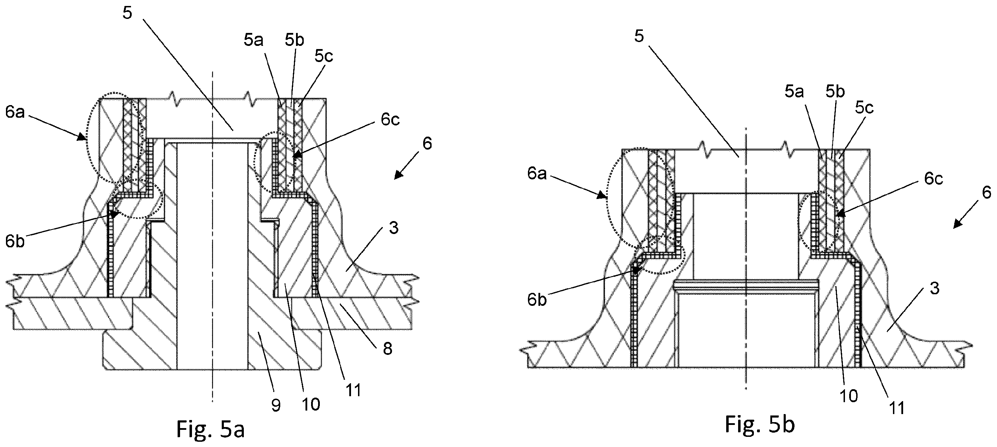

Die Ausführungsform gemäß den Figuren 5a und 5b entspricht weitgehend derjenigen gemäß den Figuren 4a und 4b. Auf die vorstehende Beschreibung wird verwiesen. Abweichend davon ist das Verbindungselement 10 wenigstens teilweise mit einer Haftvermittlungsschicht 11 versehen, die im fertigen Bauteil zwischen Verbindungselement 10 und Rohr 5 bzw. Verbindungselement 10 und Behälterwandung 3 angeordnet ist und, insbesondere stoffschlüssig, mit der Behälterwandung 3 und/oder mit der ersten und/oder der zweiten Kunststoffschicht 5a, 5c des Rohres 5 verbunden ist. Eine der Figur 5b entsprechende Ausführungsform mit nur einer Kunststoffschicht - 5a oder 5c - ist ebenfalls möglich.

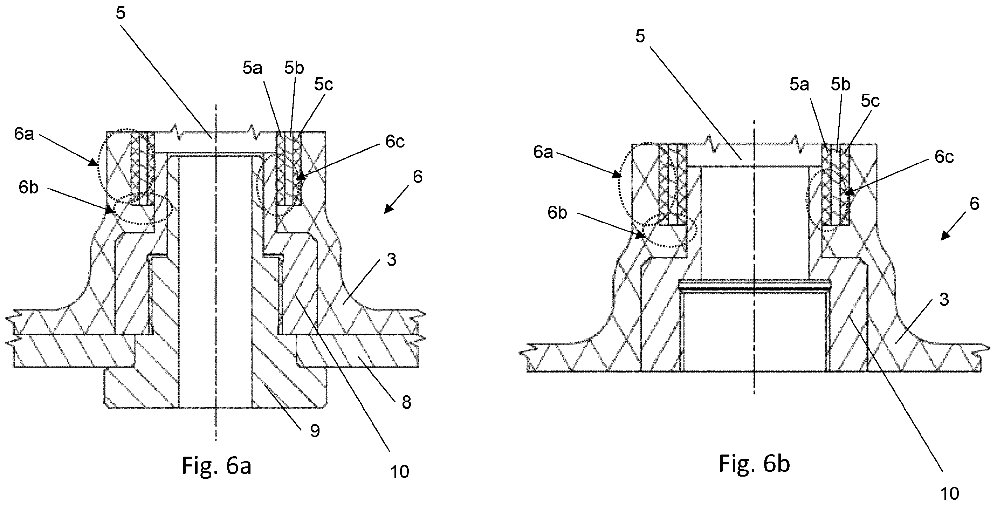

Die Ausführungsform gemäß den Figuren 6a und 6b entspricht weitgehend derjenigen gemäß den Figuren 4a und 4b. Auf die vorstehende Beschreibung wird verwiesen. Abweichend davon ist gemäß Figur 6a das stirnseitige Ende des Rohres 5 während der Herstellung des Bauteils 1 von dem Verbindungselement 10 beabstandet, so dass das Ausgangsmaterial und die daraus entstehende Behälterwandung 3 in der äußeren Anbindungszone 6a mit der Außenseite des Rohres und zusätzlich in der stirnseitigen Anbindungszone 6b mit der Stirnseite des Rohrs 5 - und dort vorzugsweise mit allen Schichten des Rohres 5 - in Kontakt kommen. Bei dem in den Figuren 6a und 6b dargestellten (bevorzugten) Aufbau des Rohrs 5 besteht daher insbesondere ein direkter Kontakt der Behälterwandung 3 zu beiden Kunststoffschichten 5a, 5c des Rohres. So besteht in der äußeren Anbindungszone 6a ein Kontakt zu der Kunststoffschicht 5c, und in der stirnseitigen Anbindungszone 6b besteht ein Kontakt zu der Kunststoffschicht 5a und zu der Kunststoffschicht 5c. Aufgrund der zusätzlichen Nutzung eines Verbindungselements 10 entsteht so ein Bereich, an dem die Behälterwandung 3 sowohl an das Rohr 5 als auch an zwei Seiten des Verbindungselements 10 anschließt und sich durch diese Formung auch ein sehr zuverlässiger formschlüssiger Verbund zwischen Behälterwandung 3, Rohr 5 und Verbindungselement 10 formt. Eine der Figur 6b entsprechende Ausführungsform mit nur einer Kunststoffschicht - 5a oder 5c - ist ebenfalls möglich.

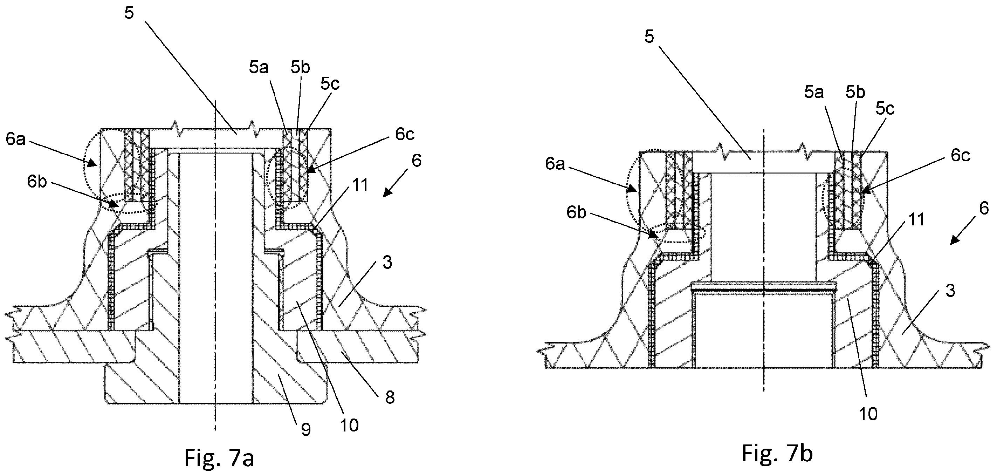

Die Figuren 7a und 7b entsprechen in ihrem grundlegenden Aufbau den Figuren 6a und 6b, wobei hier jedoch wie schon in den Figuren 5a und 5b eine zusätzliche Haftvermittlungsschicht 11 vorgesehen ist, um einen stoffschlüssigen Verbund zwischen der Behälterwandung 3 und dem Verbindungselement 10 und/oder zwischen dem Verbindungselement 10 und der ersten und/oder der zweiten Kunststoffschicht 5a, 5c des Rohres 5 zu ermöglichen. Eine der Figur 7b entsprechende Ausführungsform mit nur einer Kunststoffschicht - 5a oder 5c - ist ebenfalls möglich.

### Bezugszeichenliste

- 1: Bauteil
- 2: Behälter
- 3: Behälterwandung
- 4: Aufnahmeraum
- 5: Rohr
- 5a: Kunststoffschicht
- 5b: metallische Basisschicht
- 5c: Kunststoffschicht
- 6: Verbindungsbereich
- 6a: radial äußere Anbindungszone
- 6b: stirnseitige Anbindungszone
- 6c: radial innere Anbindungszone
- 7: Stutzen
- 8: Formschale
- 9: Haltebolzen
- 10: Verbindungselement
- 11: Haftvermittlungsschicht

## Patentansprüche

1. Bauteil (1), welches einen Behälter (2) und ein Rohr (5) umfasst, wobei der Behälter (2) eine einen ersten Kunststoff enthaltende Behälterwandung (3) umfasst, die einen Aufnahmeraum (4) des Behälters (2) zumindest teilweise begrenzt, wobei das Rohr (5) eine metallische Basisschicht (5b) sowie eine einen zweiten Kunststoff enthaltende erste Kunststoffschicht (5a, 5c) aufweist, wobei das Rohr (5) in einem ersten Verbindungsbereich (6) mit der Behälterwandung (3) fluiddicht verbunden ist, wobei sich das Rohr (5) ausgehend von dem ersten Verbindungsbereich (6) wenigstens teilweise in den Aufnahmeraum (4) hinein erstreckt.

2. Bauteil (1) nach Anspruch 1, **dadurch gekennzeichnet, dass** die Behälterwandung (3) eine Wandungsschicht aufweist, welche vollständig aus dem ersten Kunststoff besteht, und/oder dass die erste Kunststoffschicht (5a, 5c) des Rohrs (5) vollständig aus dem zweiten Kunststoff besteht.

3. Bauteil (1) nach einem der vorherigen Ansprüche, **dadurch gekennzeichnet, dass** der erste Kunststoff und/oder der zweite Kunststoff ein Polyethylen, ein Polypropylen oder ein Polyamid ist oder sind.

4. Bauteil (1) nach einem der vorherigen Ansprüche, **dadurch gekennzeichnet, dass** das Rohr (5) sich durch den Aufnahmeraum (4) des Behälters (2) erstreckt und in einem zweiten Verbindungsbereich (6) mit der Behälterwandung (3) verbunden ist.

5. Bauteil (1) nach einem der vorherigen Ansprüche, **dadurch gekennzeichnet, dass** wenigstens in dem ersten Verbindungsbereich (6) die erste Kunststoffschicht (5a, 5c) des Rohrs (5) mit der Behälterwandung (3) verbunden ist.

6. Bauteil (1) nach Anspruch 5, **dadurch gekennzeichnet, dass** in dem ersten Verbindungsbereich (6) die erste Kunststoffschicht (5a, 5c) des Rohrs (5) stoffschlüssig und unmittelbar mit der Behälterwandung (3) verbunden ist.

7. Bauteil (1) nach einem der vorherigen Ansprüche, **dadurch gekennzeichnet, dass** das Rohr (5) sich ausgehend von dem ersten Verbindungsbereich (6) außerhalb des Aufnahmeraums (4) erstreckt.

8. Bauteil (1) nach einem der vorherigen Ansprüche, **dadurch gekennzeichnet, dass** die erste Kunststoffschicht (5a, 5c) des Rohres (5) auf einer radial äußeren oder einer radial inneren Seite der metallische Basisschicht (5b) angeordnet ist.

9. Bauteil (1) nach einem der Ansprüche 1 bis 7, **dadurch gekennzeichnet, dass** die erste Kunststoffschicht (5a, 5c) des Rohrs (5) auf einer radial äußeren Seite der metallischen Basisschicht (5b) angeordnet ist und eine äußere Oberfläche des Rohrs (5) bildet oder dass die erste Kunststoffschicht (5a, 5c) des Rohrs (5) auf einer radial inneren Seite der metallischen Basisschicht (5b) angeordnet ist und eine innere Oberfläche des Rohrs (5) bildet.

10. Bauteil (1) nach einem der vorherigen Ansprüche, **dadurch gekennzeichnet, dass** das Rohr (5) eine einen dritten Kunststoff enthaltende, insbesondere vollständig aus dem dritten Kunststoff bestehende, zweite Kunststoffschicht (5c, 5a) aufweist, wobei die zweite Kunststoffschicht (5c, 5a) bevorzugt auf der der ersten Kunststoffschicht (5a, 5c) abgewandten Seite der metallischen Basisschicht (5b) angeordnet ist.

11. Bauteil (1) nach Anspruch 10, **dadurch gekennzeichnet, dass** die zweite Kunststoffschicht (5c, 5a) des Rohrs (5) in wenigstens dem ersten Verbindungsbereich (6), insbesondere stoffschlüssig und unmittelbar, mit der Behälterwandung (3) verbunden ist.

12. Bauteil (1) nach einem der vorherigen Ansprüche, **dadurch gekennzeichnet, dass** die metallische Basisschicht (5b) Aluminium oder Kupfer enthält.

13. Bauteil (1) nach einem der vorherigen Ansprüche, **dadurch gekennzeichnet, dass** zwischen der Behälterwandung (3) und der ersten Kunststoffschicht (5a, 5c) des Rohrs (5) wenigstens teilweise ein Verbindungselement (10) und/oder eine Haftvermittlungsschicht (11) vorgesehen ist oder sind.

14. Bauteil nach einem der vorherigen Ansprüche, **dadurch gekennzeichnet, dass** das Rohr (5) an wenigstens einem ersten, dem ersten Verbindungsbereich (6) zugeordneten Ende, offen ist, wobei ein, insbesondere fluidwirksamer, Anschluss mit einem Anschlussteil oder aber die Durchführung eines anderen Bauteils in das Rohr (5) möglich ist.

15. Bauteil (1) nach einem der vorherigen Ansprüche, **dadurch gekennzeichnet, dass** das Rohr (5) einen Zweigstrang aufweist, welcher an einem proximalen Ende, insbesondere fluidwirksam, mit dem Rohr (5) verbunden ist.

16. Verfahren zur Herstellung eines Bauteils (1) mit den Merkmalen nach einem der Ansprüche 1 bis 15, bei welchem ein Behälter (2) und ein Rohr (5) bereitgestellt werden, wobei der Behälter (2) eine einen ersten Kunststoff enthaltende Behälterwandung (3) und das Rohr (5) eine einen zweiten Kunststoff enthaltende erste Kunststoffschicht (5a, 5c) sowie wenigstens eine metallische Basisschicht (5b) aufweist, und wobei das Rohr (5) und die Behälterwandung (3) in wenigstens einem Verbindungsbereich (6) miteinander verbunden werden.

17. Verfahren nach Anspruch 16, **dadurch gekennzeichnet, dass** das Rohr (5) in oder an einem Hohlwerkzeug fixiert wird und dass das Bereitstellen des Behälters (2) dadurch erfolgt, dass ein den ersten Kunststoff enthaltendes oder in den ersten Kunststoff umwandelbares Ausgangsmaterial in das Hohlwerkzeug eingefüllt wird und dass der Behälter (2) in dem Hohlwerkzeug durch ein Rotationsverfahren oder ein Blasformverfahren gefertigt wird, wobei das Rohr (5) und die Behälterwandung (3) in wenigstens einem Verbindungsbereich (6) miteinander verbunden werden.

18. Verfahren nach Anspruch 16, **dadurch gekennzeichnet, dass** der Behälter (2) in einem ersten Schritt mit einer Öffnung in der Behälterwandung (3) gefertigt wird, in einem zweiten Schritt das Rohr (5) durch die Öffnung in der Behälterwandung (3) in den Behälter (2) geführt wird und in einem dritten Schritt das Rohr (5) und der Behälter (2) in einem die Öffnung umfassenden Fügebereich miteinander verbunden werden, so dass zwischen Rohr (5) und Behälterwandung (3) wenigstens ein Verbindungsbereich (6) entsteht.

## Claims

1. A component (1) comprising a container (2) and a tube (5), the container (2) including a container wall (3) that includes a first plastic and at least partially delimits a receiving space (4) of the container (2), the tube (5) having a metallic base layer (5b) and a first plastic layer (5a, 5c) including a second plastic, the tube (5) being connected fluid-tight to the container wall (3) in a first connecting region (6), the tube (5) extending from the first connecting region (6) at least partially into the receiving space (4).

2. The component (1) as recited in claim 1,
**characterized in that** the container wall (3) has a wall layer that is entirely composed of the first plastic, and/or **in that** the first plastic layer (5a, 5c) of the tube (5) is entirely composed of the second plastic.

3. The component (1) as recited in any of the preceding claims,
**characterized in that** the first plastic and/or the second plastic is or are a polyethylene, a polypropylene, or a polyamide.

4. The component (1) as recited in any of the preceding claims,
**characterized in that** the tube (5) extends through the receiving space (4) of the container (2) and is connected to the container wall (3) in a second connecting region (6).

5. The component (1) as recited in any of the preceding claims,
**characterized in that**, at least in the first connecting region (6), the first plastic layer (5a, 5c) of the tube (5) is connected to the container wall (3).

6. The component (1) as recited in claim 5,
**characterized in that**, in the first connecting region (6), the first plastic layer (5a, 5c) of the tube (5) is directly connected to the container wall (3) by a material-to-material bond.

7. The component (1) as recited in any of the preceding claims,
**characterized in that**, starting from the first connecting region (6), the tube (5) extends outside the receiving space (4).

8. The component (1) as recited in any of the preceding claims,
**characterized in that** the first plastic layer (5a, 5c) of the tube (5) is disposed on a radially outer side or a radially inner side of the metallic base layer (5b).

9. The component (1) as recited in any of claims 1 through 7,
**characterized in that** the first plastic layer (5a, 5c) of the tube (5) is disposed on a radially outer side of the metallic base layer (5b) and forms an outer surface of the tube (5) or **in that** the first plastic layer (5a, 5c) of the tube (5) is disposed on a radially inner side of the metallic base layer (5b) and forms an inner surface of the tube (5).

10. The component (1) as recited in any of the preceding claims,
**characterized in that** the tube (5) has a second plastic layer (5c, 5a) that includes, in particular is entirely composed of, a third plastic, the second plastic layer (5c, 5a) being preferably disposed on the side of the metallic base layer (5b) facing away from the first plastic layer (5a, 5c).

11. The component (1) as recited in claim 10,
**characterized in that**, at least in the first connecting region (6), the second plastic layer (5c, 5a) of the tube (5) is connected to the container wall (3), in particular by a material-to-material bond and directly.

12. The component (1) as recited in any of the preceding claims,
**characterized in that** the metallic base layer (5b) includes aluminum or copper.

13. The component (1) as recited in any of the preceding claims,
**characterized in that** a connecting element (10) and/or an adhesion-promoting layer (11) is or are provided at least partially between the container wall (3) and the first plastic layer (5a, 5c) of the tube (5).

14. The component as recited in any of the preceding claims,
**characterized in that** the tube (5) is open at at least one end associated with the first connecting region (6), it being possible to make a connection, in particular a fluid connection, with a connecting piece, or to pass another component through the open end into the tube (5).

15. The component (1) as recited in any of the preceding claims,
**characterized in that** the tube (5) has a branch tube connected, in particular fluidically, to the tube (5) at a proximal end.

16. A method for producing a component (1) having the features according to any of claims 1 through 15, wherein a container (2) and a tube (5) are provided, the container (2) having a container wall (3) including a first plastic and the tube (5) having a first plastic layer (5a, 5c) including a second plastic as well as at least one metallic base layer (5b), and the tube (5) and the container wall (3) being connected together in at least one connecting region (6).

17. The method as recited in claim 16,
**characterized in that** the tube (5) is fixed in or on a hollow mold, and **in that** providing the container (2) is accomplished by introducing into the hollow mold a starting material that includes, or is capable of being converted into, the first plastic, and **in that** the container (2) is formed in the hollow mold by a rotational process or a blow molding process, the tube (5) and the container wall (3) being connected together in the at least one connecting region (6).

18. The method as recited in claim 16,
**characterized in that**, in a first step, the container (2) is formed, including an opening in the container wall (3), and, in a second step, the tube (5) is passed through the opening in the container wall (3) into the container (2), and, in a third step, the tube (5) and the container (2) are connected together in a joint region including the opening, so that the at least one connecting region (6) is created between the tube (5) and the container wall (3).

## Revendications

1. Composant (1) comprenant un récipient (2) et un tube (5), le récipient (2) comprenant une première paroi de récipient contenant du plastique (3) qui limite au moins partiellement un espace de réception (4) du récipient (2), le tube (5) comportant une couche de base métallique (5b) et une première couche de plastique contenant une seconde couche de plastique (5a, 5c), le tube (5) étant relié de manière étanche aux fluides dans une première zone de raccordement (6) à la paroi du récipient (3), le tube (5) s'étendant au moins partiellement dans la chambre de réception (4) à partir de la première zone de raccordement (6).

2. Composant (1) selon la revendication 1, **caractérisé en ce que** la paroi du récipient (3) présente une couche de paroi qui est entièrement constituée du premier plastique et/ou que la première couche de plastique (5a, 5c) du tube (5) est entièrement composée du deuxième plastique.

3. Composant (1) selon l'une des revendications précédentes, **caractérisé en ce que** le premier plastique et/ou le deuxième plastique est ou sont un polyéthylène, un polypropylène ou un polyamide.

4. Composant (1) selon l'une des revendications précédentes, **caractérisé en ce que** le tube (5) s'étend à travers la chambre de réception (4) du récipient (2) et est relié à la paroi du récipient (3) dans une seconde zone de raccordement (6).

5. Composant (1) selon l'une des revendications précédentes, **caractérisé en ce que**, au moins dans la première zone de raccordement (6), la première couche de plastique (5a, 5c) du tube (5) est reliée à la paroi du récipient (3).

6. Composant (1) selon la revendication 5, **caractérisé en ce que**, dans la première zone de raccordement (6), la première couche de plastique (5a, 5c) du tube (5) est reliée par correspondance de matière et directement à la paroi du récipient (3).

7. Composant (1) selon l'une des revendications précédentes, **caractérisé en ce que** le tube (5) s'étend à l'extérieur de la zone de réception (4) à partir de la première zone de raccordement (6).

8. Composant (1) selon l'une des revendications précédentes, **caractérisé en ce que** la première couche de plastique (5a, 5c) du tube (5) est disposée sur un côté radial extérieur ou radial intérieur de la couche métallique de base (5b).

9. Composant (1) selon l'une des revendications 1 à 7, **caractérisé en ce que** la première couche de plastique (5a, 5c) du tube (5) est disposée sur un côté radial extérieur de la couche métallique de base (5b) et forme une surface extérieure du tube (5) ou que la première couche de plastique (5a, 5c) du tube (5) est située sur un côté radialement intérieur de la couche de base métallique (5b) et forme une surface intérieure supérieure du tube (5).

10. Composant (1) selon l'une des revendications précédentes, **caractérisé en ce que** le tube (5) comporte une seconde couche de plastique contenant un troisième plastique, en particulier entièrement constituée du troisième plastique (5c, 5a), la seconde couche de plastique (5c, 5a) étant disposée de préférence sur le côté opposé à la première couche de plastique (5a, 5c) de la couche de base métallique (5b).

11. Composant (1) selon la revendication 10, **caractérisé en ce que** la seconde couche de plastique (5c, 5a) du tube (5) est reliée à la paroi du récipient (3) dans au moins la première zone de raccordement (6), en particulier par liaison de matière et directement.

12. Composant (1) selon l'une des revendications précédentes, **caractérisé en ce que** la couche métallique de base (5b) contient de l'aluminium ou du cuivre.

13. Composant (1) selon l'une des revendications précédentes, **caractérisé en ce qu'**entre la paroi du récipient (3) et la première couche de plastique (5a, 5c) du tube (5), il est prévu au moins partiellement un élément de liaison (10) et/ou une couche d'adhérence (11).

14. Composant selon l'une des revendications précédentes, **caractérisé en ce que** le tube (5) est ouvert à au moins une première extrémité associée à la première zone de raccordement (6), un raccordement, notamment fluidique, comportant un raccord ou le passage d'un autre composant dans le tube (5) étant possible.

15. Composant (1) selon l'une des revendications précédentes, **caractérisé en ce que** le tube (5) présente une branche secondaire qui est reliée au tube (5) à une extrémité proximale, en particulier de manière fluidique.

16. Procédé de fabrication d'un composant (1) présentant les caractéristiques selon l'une des revendications 1 à 15, dans lequel un récipient (2) et un tube (5) sont prévus, le récipient (2) présentant une paroi de récipient contenant un premier plastique (3) et le tube (5) une première couche de plastique contenant un deuxième plastique (5a, 5c) et au moins une couche métallique de base (5b) et le tube (5) et la paroi du récipient (3) étant reliés entre eux dans au moins une zone de liaison (6).

17. Procédé selon la revendication 16, **caractérisé en ce que** le tube (5) est fixé dans ou sur un outil creux et que la prévision du récipient (2) a lieu par le fait qu'une matière première contenant le premier plastique ou transformable en premier plastique est introduite dans l'outil creux et que le récipient (2) est fabriqué dans l'outil creux par un procédé de rotation ou un procédé de moulage par soufflage, le tube (5) et la paroi du récipient (3) étant reliés entre eux dans au moins une zone de raccordement (6).

18. Procédé selon la revendication 16, **caractérisé en ce que** le récipient (2) est fabriqué dans un premier temps avec une ouverture dans la paroi du récipient (3), que, dans une deuxième étape, le tube (5) est introduit dans le récipient (2) par l'ouverture dans la paroi du récipient (3) et que, dans une troisième étape, le tube (5) et le récipient (2) sont reliés entre eux dans une zone d'assemblage comprenant l'ouverture, de telle sorte que, entre le tube (5) et la paroi du récipient (3), au moins une zone de raccordement (6) soit créée.
